# EUROPÄISCHE PATENTANMELDUNG

(11) **EP 1 398 078 A2**
(43) Veröffentlichungstag der Anmeldung: **17.03.2004**
(21) Anmeldenummer: 03090296.9
(22) Anmeldetag: 12.09.2003
(51) Int. Cl.: B01J 19/00

(54) **Verfahren und Vorrichtung zur parallelisierten Prüfung von Feststoffen**

(30) Priorität: 14.09.2002 DE 10242857
(71) Anmelder: Amtec Anwendungszentrum für Mikrotechnologien Chemnitz Gesellschaft mit beschränkter Haftung, 09125 Chemnitz (DE); Institut für Angewandte Chemie Berlin-Adlershof E.V., 12489 Berlin (DE)
(72) Erfinder: Grubert, Gerd, 14195 Berlin (DE); Glaschke, Andreas, 09126 Chemnitz (DE); Richter, Thomas, 09112 Chemnitz (DE); Baerns, Manfred, 14195 Berlin (DE); Krusche, Michael, 09126 Chemnitz (DE)
(74) Vertreter: Walter, Wolf-Jürgen

(57) **Zusammenfassung**

Die Erfindung betrifft ein Verfahren und eine Vorrichtung zur parallelisierten Prüfung der Leistungsfähigkeit sowie zur Ermittlung von physikalisch-chemischen Eigenschaften von Feststoffen, vorzugsweise von katalytischen Feststoffen, die jeweils als Schüttung oder als einzelne Formkörper in mehreren parallelen Reaktorkanälen angeordnet und von fluiden Medien durchströmt werden. Es wird die Aufgabe gelöst, Voraussetzungen zu schaffen, dass unter Reaktionsbedingungen die Temperatur der Festkörperschüttung oder des Formkörpers direkt im Katalysatorbett gemessen werden kann und dass gleichzeitig weitere physikalisch-chemische Parameter ermittelt werden können. Dies wird erreicht, indem die Festkörperschüttung oder der einzelne Formkörper von vorgeheizten Reaktantfluiden durchströmt wird, wobei das Temperaturprofil und weitere physikalisch-chemische Parameter entlang der einzelnen Festkörperschüttungen oder entlang der Formkörper durch unterschiedliche verlagerbare Sonden ermittelt werden und wobei mittels einer verlagerbaren, in die Reaktorkanäle einführbaren Sonde eine Probenahme des Abstromfluides für die Analyse erfolgt. Eine hierfür geeignete Vorrichtung weist eine Baugruppe zur Vorheizung der Reaktantfluide in einer Vorheizzone (5), eine Baugruppe zur Führung von Messsonden (8) über die Festkörperschüttungen (1) oder Formkörper, eine Baugruppe zur Druckregelung der die Festkörperschüttungen (1) oder Formkörper durchströmenden Medien und eine Baugruppe zur Einführung von zumindest einer Sonde (12) für eine Probenahme von Abstromfluid in die Reaktorkanäle (2) auf.

## Beschreibung

Die Erfindung betrifft ein Verfahren und eine Vorrichtung zur parallelisierten Prüfung der Leistungsfähigkeit sowie zur Ermittlung von physikalisch-chemischen Eigenschaften von Feststoffen, insbesondere von katalytischen Feststoffen unter Reaktionsbedingungen, wobei die Feststoffe jeweils als Schüttung oder einzelner Formkörper in mehreren, parallel zueinander verlaufenden Reaktorkanälen angeordnet, auf eine bestimmte Temperatur gebracht und von fluiden Medien durchströmt werden.

Für die Messung katalytischer Reaktionsdaten von heterogenkatalysierten Gasphasenreaktionen müssen verschiedenartige Reaktionsparameter während des Testens schnell variiert werden, u.a. die Reaktionstemperatur, die Kontaktzeit der Reaktanten an der Feststoffschüttung bzw. am einzelnen Formkörper sowie die Konzentration der einzelnen Reaktionsedukte. Die Durchführung solcher Änderungen ist bei nicht parallelisierten Ausprüfungen sehr zeitaufwendig. Hingegen kann die Dauer der Messung der Reaktionsdaten mit parallelisierter Ausprüfung erheblich verkürzt werden.

Zusätzlich müssen diese und weitere Parameter (z.B. die Temperatur am Feststoff und die Kontaktzeit) sowie alle Produkte und Edukte im Abstrom quantitativ genau erfasst werden. Erschwerend ist bei exothermen oder endothermen Reaktionen am Feststoff, dass eine Ungleichverteilung der Temperatur über die Feststoffschüttung vorliegt. Die Aufnahme dieser Daten mit sogenannten parallelen Hochdurchsatzmethoden verkürzt die Zeit hierfür um ein Vielfaches.

In-situ Spektroskopien wie UV-Vis, lR, XRD, RFA, die zur physikalisch-chemischen Charakterisierung und damit zur weiteren Optimierung notwendig sind, werden in der Regel in einer aufwendigen Reaktionszelle einzeln durchgeführt. Auch hier führt die Durchführung in einer parallelen Hochdurchsatzapparatur zu einer zeitlichen Verkürzung der Datenaufnahme und somit zu einer Verkürzung der Zeit der Materialentwicklung.

Allerdings weisen die bisher üblichen Verfahren zum parallelisierten Ausprüfen von katalytischen Materialien verschiedenartige Mängel auf, die exakte Messungen nicht oder nur bedingt ermöglichen. So sind beispielsweise aus DE 198 05 719 A 1, DE 198 30 607 A 1, WO 98/ 07 026 und WO 99/ 19 724 technische Lösungen bekannt, bei denen die Temperatur jedes einzelnen Katalysators in der Schüttung nicht gemessen wird. Da exotherme Reaktionen zu einer Temperaturerhöhung am Festkörper führen können, werden demzufolge die katalytischen Testergebnisse verfälscht und somit sind die einzelnen Katalysatoren wenig zueinander vergleichbar. Weiterhin wird der Katalysator über die Reaktorwand beheizt. Dieser Prozess ist relativ langsam.

Auch gemäß WO 99/ 64 160 erfolgt keine Temperaturmessung direkt im Katalysatorbett, so dass aufgrund des langsamen Wärmeübergangs von der katalytischen Schüttung zum Thermoelement eventuell auftretende Temperaturänderungen, insbesondere Hotspots, kaum zu ermitteln sind. Ferner erfolgt auch hier die Beheizung des Katalysators über die Wand, so dass es ebenfalls zu einer relativ langen Aufheizphase kommt. Schließlich weisen WO 97/ 32 208 und WO 98/ 15 969 ebenfalls ähnliche Mängel auf, wobei hier zusätzlich die Katalysatorschüttung nicht bzw. nicht einheitlich durchströmt wird. Somit entsprechen die erzielten Ergebnisse keineswegs den Ergebnissen unter Testbedingungen eines Standardlaborreaktors.

Bei den oben erwähnten und bisher bekannten Reaktorsystemen ist die Katalysatorschüttung entlang der Durchströmungsrichtung der Reaktantgase nicht für Messsonden zur Temperaturmessung und physikalisch-chemischen Charakterisierung zugänglich, dass heißt, bei diesen parallelen Apparaturen ist es nicht möglich, während des Testens die Temperatur und weitere physikalisch-chemische Parameter für in-situ-Charakterisierungsmethoden, insbesondere entlang der Katalysatorschüttung (z.B. XRD, UV-Vis, RAMAN , FT-IR-etc.) zu messen.

Aufgabe der Erfindung ist es daher, ein Verfahren zur parallelisierten Prüfung von Feststoffen zu schaffen, mit dem unter Reaktionsbedingungen bei einem schnellen Wärmeübergang die Temperatur des Festkörpers direkt in der Schüttung bzw. am Formkörper gemessen werden kann und mit dem ebenfalls unter Reaktionsbedingungen weitere physikalisch-chemische Parameter ermittelt werden können. Hierbei soll das zu prüfende Material entweder als einheitlich durchströmte Festbettschüttung vorliegen, um eine für die kinetische Auswertung notwendige Pfropfenströmung zu erzielen, oder als einzelner Formkörper. Ferner soll eine Vorrichtung zur Durchführung des Verfahrens geschaffen werden.

Diese Aufgabe wird mit einem Verfahren gelöst, indem
- das den Feststoffen mit regelbarer Durchströmungsgeschwindigkeit zugeführte Reaktantfluid vorgeheizt ist,
- die physikalisch-chemischen Eigenschaften entlang einer einheitlich durchströmten Festkörperschüttung oder entlang eines einzelnen Formkörpers von außen durch die Wände der Reaktorkanäle durch senkrecht und waagerecht zur Fluidströmung sowie in der Höhe auch verlagerbare Sonden gemessen werden, wobei die Wände der Reaktorkanäle wenigstens im Bereich der Schüttung oder des Formkörpers teilweise oder vollständig transparent sind, und
- eine Probenahme des Abgasstromes durch eine oder mehrere in die Abströmöffnungen der Reaktorkanäle einführbare und in x,y,z-Richtung zur Abströmrichtung des Fluids verlagerbare Sonde(n) erfolgt.

Gegenstand der Erfindung ist daher auch eine Vorrichtung, bei der jeder Reaktorkanal in Strömungsrichtung folgenden Aufbau hat:
- eine Einrichtung zur Druckregelung am Eingang des Reaktorkanals;
- eine Vorheizzone;
- eine Zone für eine Festkörperschüttung oder für einen einzelnen Formkörper, wobei die Wandung des Reaktorkanals wenigstens im Bereich der Festkörperschüttung oder des Formkörpers teilweise oder vollständig transparent ist;
- eine Abströmöffnung, die für die Einführung einer Sonde zugänglich ist; und
- wobei außerhalb der Reaktorkanäle eine erste Einrichtung zur Führung von Messsonden angeordnet ist, die wenigstens über den Bereich der Festkörperschüttung oder des einzelnen Formkörpers verfahrbar ist; und
- eine zweite Einrichtung zur Führung von Sonden angeordnet ist, die wenigstens über den Bereich der Abströmöffnung der Reaktorkanäle verfahrbar ist.

Vorteilhafte Ausgestaltungen sind Gegenstand der jeweils abhängigen Unteransprüche.

Vorteilhaft ist das den Feststoffen mit regelbarer Durchströmungsgeschwindigkeit zugeführte Reaktantfluid auf eine Temperatur vorgeheizt, die im Bereich von 10 bis 60%, insbesondere 10 bis 40% oberhalb der Prüfungs- oder Arbeitstemperatur der Feststoffe liegt.

Weiterhin vorteilhaft ist, dass das den Feststoffen mit regelbarer Durchströmungsgeschwindigkeit zugeführte Reaktantfluid bei exothermen oder autothermen Reaktionen auf eine Temperatur vorgeheizt ist, die im Bereich von 10 bis 90%, insbesondere 10 bis 70% unterhalb der Prüfungs- oder Arbeitstemperatur der Feststoffe liegt.

Die Durchströmgeschwindigkeit der Reaktantfluide durch die Festkörperschüttung oder über den einzelnen Formkörper ist für jeden separaten Reaktorkanal oder für jeweils eine Gruppe von Reaktorkanälen über die Fluidzuführung individuell einstellbar.

Ein wesentlicher Vorteil der erfindungsgemäßen technischen Lösung besteht darin, dass mit den katalytischen Messdaten gleichzeitig die Temperaturen entlang der einzelnen parallelen Katalysatorschüttungen oder entlang der einzelnen Katalysatorformkörper ermittelt werden. Dadurch ist eine bessere Vergleichbarkeit der getesteten katalytischen Materialien möglich.

Die Festkörperschüttung oder der Formkörper werden nicht über die Reaktionsgefäßwandung mittels Wärmeleitung, sondern durch Strahlung beheizt, d.h. für einen oder mehrere Kanäle wird die Festkörperschüttung oder der einzelne Formkörper zusätzlich direkt aufgeheizt. Demzufolge sind die zu untersuchende Schüttung oder der einzelne Formkörper frei für Messsonden zugänglich, so dass eine kontaktlose Temperaturmessung möglich wird. Diese kann sequentiell mittels Pyrometer (gekoppelt an eine Verfahreinrichtung) bzw. parallel mittels Thermographie für jede Festkörperschüttung oder für jeden Formkörper durchgeführt werden. Somit können Hotspots und Temperaturprofile für eine kinetische Auswertung der Daten schnell ermittelt werden.

Bei konventioneller Beheizung von Festkörperschüttungen bewirkt die Aufheizung der Gefäßwand einen relativ langsamen Wärmeübergang zwischen der Gefäßwand und der Festkörperschüttung, in dessen Folge es zu einem relativ langsamen Aufheizen auf die gewünschte Temperatur kommt. Durch Anwendung der vorgeschlagenen technischen Lösung wird es möglich, die parallel durchströmten und mit vorgeheiztem Reaktantfluid beaufschlagten Festkörperschüttungen innerhalb einer sehr kurzen Zeit von Raumtemperatur auf die gewünschte Reaktionstemperatur aufzuheizen, z. B. können 400°C Festkörpertemperatur innerhalb von 10 min erreicht werden, dies entspricht einer Aufheizrampe von ca. 40 K/min. Auch die Abkühlung des Reaktors auf Raumtemperatur, die für eine erneute Befüllung für die nächsten Tests notwendig ist, wird innerhalb von 30 min erzielt. Dadurch verkürzt sich gegenüber den bisher bekannten technischen Lösungen auch die Zeit zwischen zwei Reaktorbefüllungen, in welcher der Reaktor ungenutzt ist.

Die Anwendung verlagerbarer, in die Reaktorkanäle einführbarer Sonden zur Analyse des Abstromfluids ermöglicht eine Erhöhung des Durchsatzes der parallelen Messungen und ergibt weitere Vorteile, indem die Sonden wenig Wartung erfordern bzw. mit geringem Aufwand austauschbar sind. Somit werden die Nachteile vermieden, die bei der bisher üblichen Führung des Abstroms über verschaltete Multiportventile zur Analytik eine Verstopfung dieser Ventile und somit zusätzliche Wartungsarbeiten ergeben können.

Bei der Analytik werden vorteilhaft für die Ermittlung der physikalisch-chemischen Parameter der Feststoffe als Charakterisierungsmethoden UV-Vis und lR-Spektroskopien sowohl in Transmission als auch in Reflektion, Röntgendiffraktometrie und -beugung sowie Röntgenfluoreszenz und Ramanspektroskopie verwendet und/oder kombiniert.

Die Nutzung einschraubbarer Düsen als Druckrestriktoren vermindert sowohl den erforderlichen Bauraum an der Vorrichtung gegenüber Kapillaren als Druckrestriktoren, als auch den notwendigen Wartungsaufwand, weil die Düsen bei einer eventuellen Verstopfung problemlos ausgetauscht werden können. Dies ist auch ein wesentlicher Vorteil gegenüber bisherigen Ausgestaltungen der Druckrestriktoren als eingearbeitete Lochblenden bzw. enge Kanäle. Außerdem können mittels der Düsen individuell für jeden Reaktorkanal Druckabfälle bzw. Fluiddurchflussgeschwindigkeiten eingestellt werden. Ferner ergibt eine alternativ vorgeschlagenen Ausgestaltung der Reaktorkanäle innerhalb einer gemeinsamen Reaktorplatte weitere Wartungs- und Kostenvorteile. Die einschraubbaren Düsen sind vorteilhaft als Madenschrauben ausgestaltet, in die gegebenenfalls ein Druckrestiktor eingepresst ist.

ln der Zeichnung ist ein Ausführungsbeispiel einer Vorrichtung zur Durchführung des erfindungsgemäßen Verfahrens dargestellt, das nachfolgend beschrieben wird. Es zeigen:

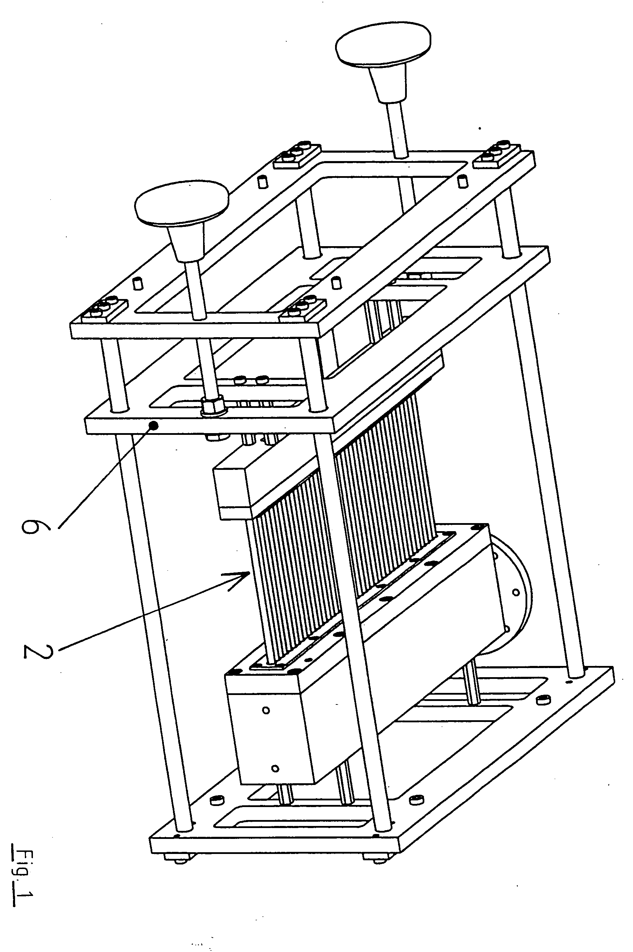

- Fig. 1: den grundsätzlichen Aufbau der Vorrichtung in perspektivischer Darstellung
- Fig.2: eine erste Variante zur Anordnung einer Vielzahl paralleler Reaktorkanäle in Schnittdarstellung mit zusätzlicher Darstellung einer Düse im Detail
- Fig. 3: den Aufbau eines separaten Reaktorkanals gemäß Fig. 2
- Fig. 4: eine zweite Variante zur Anordnung einer Vielzahl paralleler Reaktorkanäle
- Fig. 5: eine Variante zur Aufheizung der Vorheizzone mit Quarzstrahlern
- Fig. 6: eine Variante zur Temperaturmessung der Festkörperschüttung bzw. des einzelnen Formkörpers mit Pyrometer.

Die in der Zeichnung dargestellte Vorrichtung wird zur parallelisierten Prüfung der Leistungsfähigkeit sowie zur Ermittlung von physikalisch-chemischen Eigenschaften von Feststoffen unter Reaktionsbedingungen verwendet. Eine bevorzugte Anwendung ist die Prüfung katalytischer Feststoffe, die Gegenstand des folgenden Ausführungsbeispiels ist.

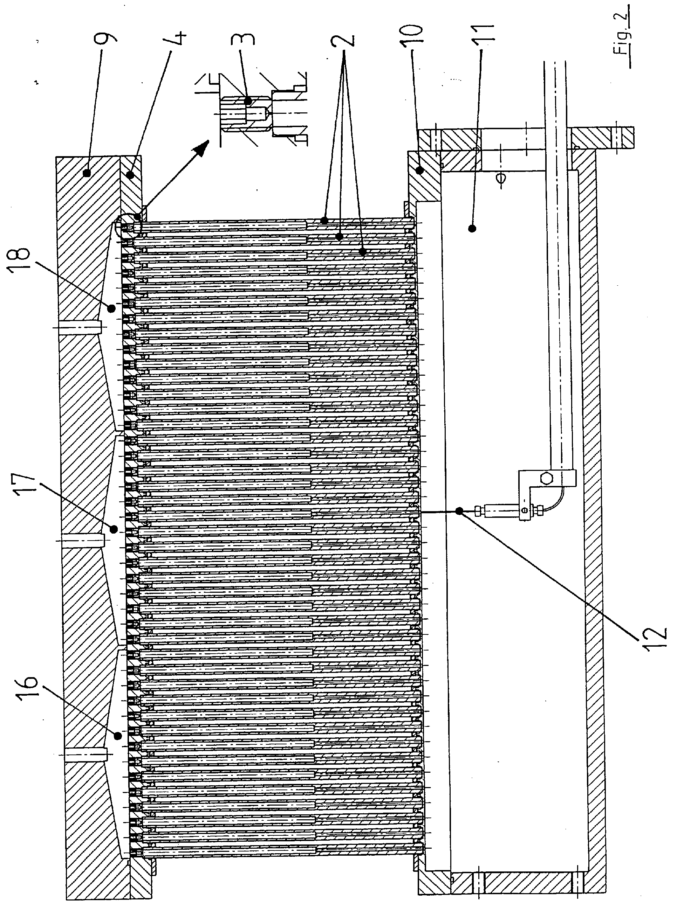

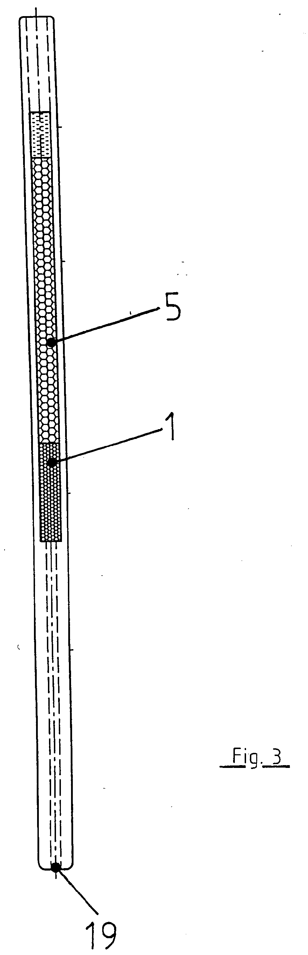

Hierbei sind die katalytischen Feststoffe, die von fluiden Medien durchströmt werden, jeweils als Festkörperschüttung 1 oder als entsprechender einzelner Formkörper in mehreren parallel zueinander verlaufenden Reaktorkanälen 2 angeordnet. Die Anzahl der Reaktorkanäle 2 wird unter Beachtung der jeweils konkreten Anwendung festgelegt. Die Reaktorkanäle 2 können sowohl vertikal als auch horizontal verlaufend angeordnet und auch verschiedenartig ausgestaltet werden, wobei zunächst eine Ausgestaltung gemäß Fig. 2 und Fig. 3 beschrieben wird. Hierbei wird dem Strömungseingang jedes Reaktorkanals 2 eine einschraubbare Düse 3 zugeordnet. Der grundsätzliche Aufbau einer solchen, als Druckrestriktor wirkenden Düse 3 ist als Detail in Fig. 2 gezeigt.

ln der Ausführung gemäß Fig. 2 und Fig. 3 sind die Reaktorkanäle 2 als frei hängende Durchführungen unter Verwendung von Quarzglasröhrchen ausgestaltet. Eine zweckmäßige Ausgestaltung wird erreicht, indem die Reaktorkanäle 2 in Strömungsrichtung von einem, im Durchmesser zunächst größeren Abschnitt in einen, im Durchmesser kleineren Abschnitt übergehen. Somit kann die Abströmgeschwindigkeit vorteilhaft erhöht und damit ein Zurückströmen von Gas aus der Kammer 11 weitgehend vermieden werden. Hierbei ist die katalytische Festkörperschüttung 1 in dem, in Strömungsrichtung vordersten Bereich des durchmessergrößeren Abschnittes des Reaktorkanals 2 angeordnet. Die Reaktorkanäle 2 sind eingangsseitig in einer gemeinsamen Halteplatte 4 abgestützt. Dieser Halteplatte 4 ist ein Gasverteiler 9 zur Zuführung von Reaktantgas zugeordnet. Ausgangsseitig sind die Reaktorkanäle 2 in einer weiteren gemeinsamen Halteplatte 10 abgestützt. Der Halteplatte 10 ist die gasdichte Kammer 11 zugeordnet, in der zumindest eine Sonde 12 verlagerbar angeordnet ist, die zur Probenahme von Abstromgas in die Reaktorkanäle 2 eingeführt werden kann.

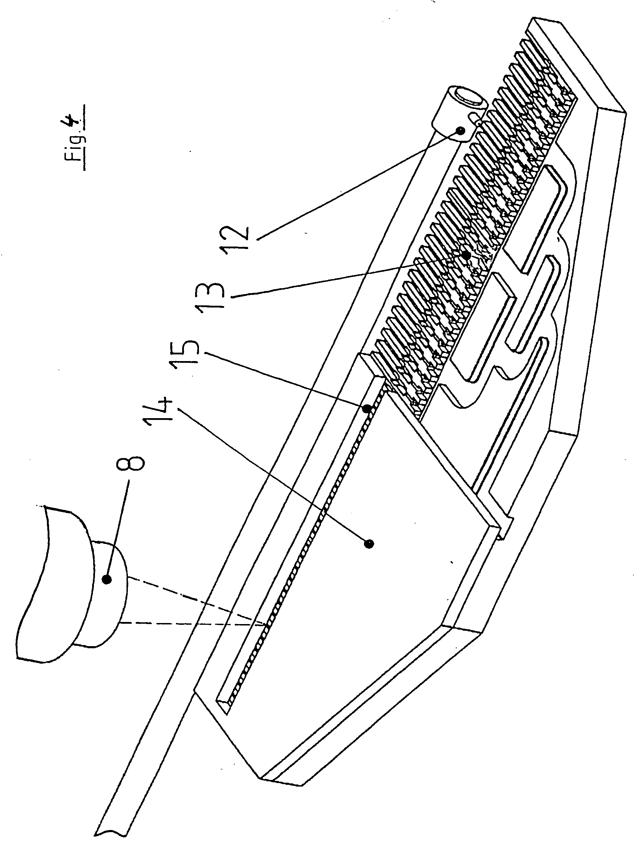

Die Reaktorkanäle 2 können alternativ in einer gemeinsamen Reaktorplatte 13 ausgestaltet werden, wobei Fig. 4 eine solche Anordnung zeigt. in der Reaktorplatte 13 ist eine Kanalstruktur vorgesehen, deren geometrische Abmessungen den Strömungsweg des Reaktantgases, die Wirkungsweise der Druckrestriktoren, die Vorheizzone, spezielle Aufnahmen für Festkörperschüttungen oder einzelne Formkörper und Veränderungen der Durchströmquerschnitte zur Beeinflussung der Strömungsgeschwindigkeit innerhalb der separaten Reaktorkanäle 2 definieren. Vorzugsweise ist den Reaktorkanälen 2 eine Abdeckung 14 zugeordnet. Die Abdeckung weist zumindest im Bereich der katalytischen Festkörperschüttung 1 bzw. des einzelnen Katalysatorformkörpers ein Sichtfenster 15 auf, über dem Messsonden geführt werden können.

Die Vorrichtung weist mehrere Baugruppen auf. Am Reaktoreingang wird das Reaktantgas durch eine Baugruppe zur Gasverteilung und Druckregelung gleichmäßig auf die Reaktorkanäle 2 verteilt. Über eine Baugruppe zur Vorheizung der Reaktantgase, die sich in einer Vorheizzone 5 befindet, wird das Reaktantgas je nach Problemstellung auf eine gewünschte Temperatur aufgeheizt. Anschließend trifft das aufgeheizte Gas auf die Festkörperschüttungen 1 oder die einzelnen Formkörper, wo die Reaktion stattfindet. Ein entscheidendes Merkmal ist eine Einrichtung zur Führung von Messsonden über die Festkörperschüttungen 1 bzw. die Formkörper. Mit Hilfe dieser (in der Zeichnung nicht näher dargestellten) Einrichtung ist es möglich, die Temperatur kontaktlos zu erfassen sowie physikalisch-chemische Eigenschaften zu messen. An der Abströmöffnung 19 des Ausgangs vom Reaktorkanal 2 befindet sich eine Einrichtung zur Einführung von zumindest einer Sonde 12 in die Reaktorkanäle 2 für eine Probenahme von Abstromgas. Die konkrete Ausgestaltung weiterer Baugruppen - z.B. einer gestellartigen. Baugruppe 6 zur Lagefixierung - ist im vorliegenden Sachverhalt weitgehend unerheblich und wird deshalb nicht näher erörtert. Für die Funktionsfähigkeit der Vorrichtung und folglich für die Durchführung des vorgeschlagenen Verfahrens sind insbesondere die bisher benannten Baugruppen wesentlich, die nachfolgend nochmals näher beschrieben werden.

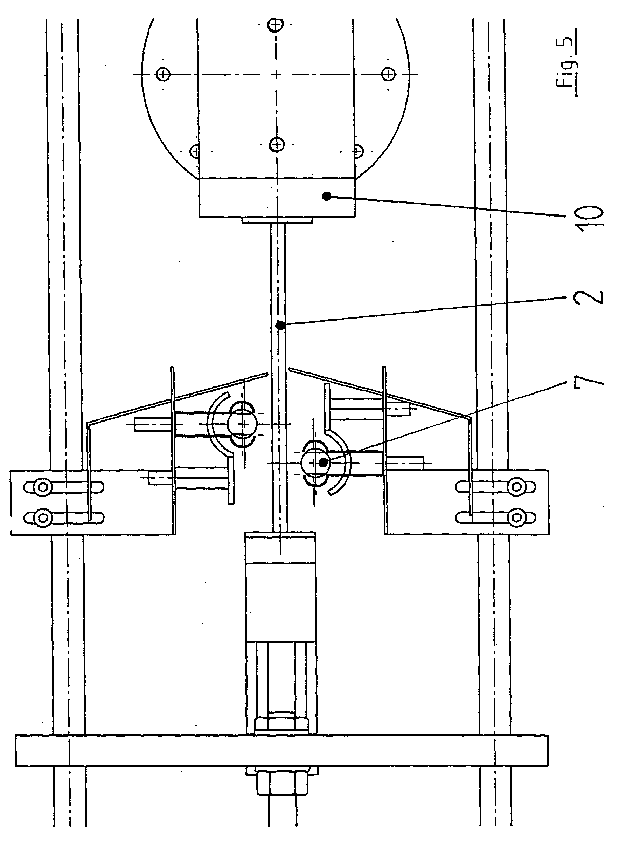

Die Vorheizzone 5 kann aus verschiedenartigen Materialien bestehen, z.B. aus einer Schüttung aus körnigem und inertem Material oder aus einem Formkörper aus z.B. porösen inerten gesinterten Material. Das jeweilige Material (z.B. eine SiC-Schüttung) ist im Reaktorkanal 2 in Strömungsrichtung vor der katalytischen Festkörperschüttung 1 bzw. vor einem einzelnen Katalysatorformkörper angeordnet und vorzugsweise mit einem anderen Material (z.B. Glaswolle) lagefixiert, wobei die unterschiedlichen Materialien in Fig. 3 mit unterschiedlichen Schraffierungen stilisiert sind. Die Aufheizung der Vorheizzone 5 kann unterschiedlich realisiert werden, z.B. unter Verwendung von lR-Quarzstrahlem 7, die gemäß Fig. 5 in Längsrichtung der Reaktorkanäle 2 verlagerbar sind. Alternativ wird vorgeschlagen, dass die Vorheizzone 5 mit mindestens einer, in thermischem Kontakt mit der Wand des Reaktorkanals 2 und der Vorheizschüttung stehenden Flächenheizung aufgeheizt wird. Schließlich ist es möglich, dass die Vorheizzone 5 innerhalb einer Box mit einem Heizmedium, in dem sich Kanäle mit der Vorheizschüttung befinden, aufgeheizt wird. Diese Vorschläge sind vorteilhafte Ausführungsformen der Erfindung.

Zusätzlich zur Vorheizzone 5 kann eine direkte Beheizung der Festkörperschüttung 1 oder des Formkörpers vorgesehen werden. Auch hierfür sind verschiedene Alternativen möglich, z.B. die Verwendung eines lR-Quarzstrahlers, die Anordnung mindestens einer, in thermischem Kontakt mit der Wand des Reaktorkanals 2 und der Festkörperschüttung 1 bzw. dem Formkörper stehenden Flächenheizung oder die Nutzung einer Box mit einem Heizmedium, in der sich Kanäle mit der Festkörperschüttung 1 bzw. dem Formkörper befinden, welche durch die Umströmung mit einem heißen Medium aufgeheizt werden. Dies sind ebenfalls vorteilhafte Ausführungsformen der Erfindung.

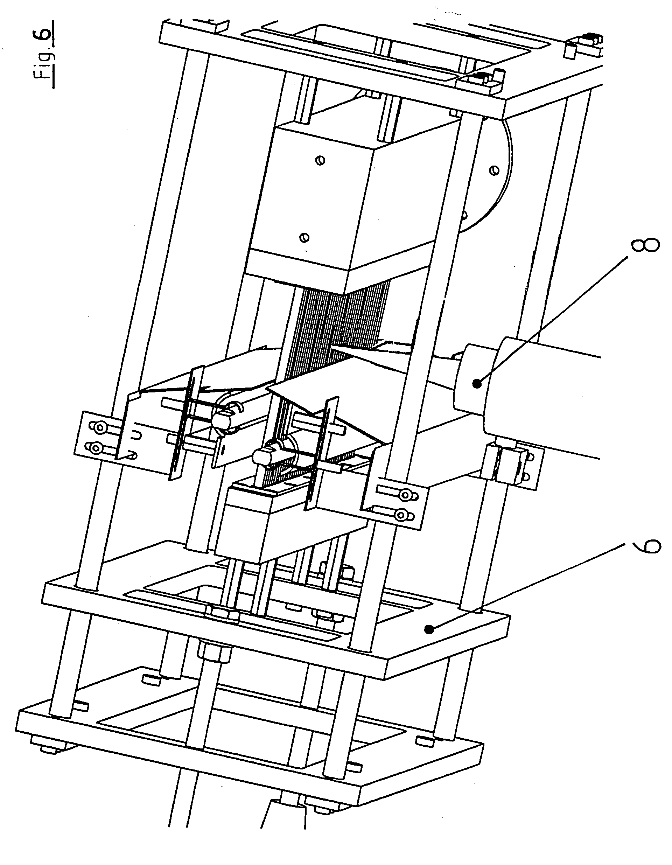

Als Sonde zur Temperaturmessung kann gemäß Fig. 6 beispielsweise ein verlagerbares Pyrometer 8 verwendet werden. Alternativ kann eine Thermokamera oder die Verwendung von mehreren, in thermischem Kontakt zur Festkörperschüttung 1 oder zum katalytischen Formkörper stehenden Thermoelementen vorgesehen werden.

Die Vorrichtung umfasst eine beliebige Anzahl parallel angeordneter Reaktorkanäle 2, z.B. 14, 28, 42, 100 oder 200. Die einzelnen Reaktorkanäle 2 haben eine Länge "L" und einen inneren Durchmesser "d₁". "L" kann beliebige Werte annehmen, bevorzugt sind Werte zwischen 10 und 500 mm. Auch "d₁" kann beliebige Werte annehmen, bevorzugt zwischen 1 und 10 mm. Als verfügbares Volumen für die Festkörperschüttung ergeben sich dann Werte von 0,01 bis 0,50 ml, dies entspricht in der Regel 10 bis 500 mg Material.

Die Reaktorkanäle 2 können verschiedenartige Querschnitte aufweisen, z.B. kreisförmige Konturen. Auch die Anordnung der Reaktorkanäle 2 zueinander ist variabel. Zu beachten ist lediglich, dass eine Zugänglichkeit zu jedem einzelnen Reaktor 2 für die Temperaturmessung, für die Messsonden zur physikalisch-chemischen Charakterisierung und für die Aufheizbaugruppe gewährleistet ist. Bevorzugt wird eine lineare Anordnung der einzelnen Reaktorkanäle 2 zueinander. Hierbei können z.B. (wie in Fig. 2 dargestellt) 42 linear angeordnete runde Quarzglasröhrchen als Reaktoren 2 mit einer Länge l = 150 mm und einem Außendurchmesser d = 5-7 mm verwendet werden. Ebenso sind kreisförmig angeordnete Kanäle oder Arrays möglich, wobei hier die Sonden von außen an die jeweiligen Festkörperschüttungen 1 bzw. Formkörper herangebracht werden können.

Die Reaktorkanäle 2 können prinzipiell aus jeglichen Materialien bestehen, die wenigstens teilweise transparent gegenüber mindestens einer der zu verwendenden Sondenmethoden sind. Diese Forderung erfüllen beispielsweise Gläser aus Quarz, NaCl, Saphir, BaF₂ und ZnS oder auch Keramik oder Silizium. Weiterhin können die Reaktorkanäle 2 zumindest im Bereich der katalytischen Festkörperschüttung 1 ein (in der Zeichnung nicht näher dargestelltes) Sichtfenster aufweisen oder vollständig transparent sein z.B. Quarzglasröhrchen.

Die Reaktorkanäle 2 werden über einen Gasverteiler 9, der zur zusätzlichen Vorheizung der Gase optional beheizt werden kann, mit Reaktantgas beschickt. Der Gasverteiler 9 kann so aufgeteilt werden, dass jeweils nur eine bestimmte Anzahl von Reaktorkanälen 2 mit einer individuellen Reaktantgasmischung beaufschlagt werden kann. Denkbar sind alle möglichen Aufteilungen der Reaktorkanäle 2, z.B. eine Aufteilung in jeweils eine gleiche Anzahl von Reaktorkanälen 2. Bei der in Fig. 2 dargestellten Ausführung wird die Gaszuführung 9 in drei Gruppen 16 ,17, 18 aufgeteilt. Hierdurch ist es zum Beispiel möglich, drei verschiedene Gasmischungen zu beaufschlagen. Mit derartigen Anordnungen können unterschiedliche Materialvorbehandlungen, wie die Festkörperaktivierung, unterschiedliche Reaktantgasmischungen sowie eine temperaturprogrammierte Reduktion und Oxidation bei einem Messdurchlauf an der Vorrichtung untersucht werden.

Am Ausgang des Gasverteilers 9 befinden sich die zur gasdichten Aufnahme der Durchführungen bzw. der Halteplatte 4 notwendigen Aussparungen mit Dichtungsmaterial. Vor diesen Aussparungen befindet sich für jeden Kanal 2 ein Gewinde zur Aufnahme der einschraubbaren Düsen 3, die einen für alle Reaktorkanäle 2 gleichen Druckabfall erzeugen, der mindestens 10-mal höher ist als über ein jeweiliges Material in dem entsprechenden Reaktorkanal 2. Somit kommt es zu einer Gleichverteilung der Reaktantgasflüsse über die Festkörperschüttungen 1 in den jeweiligen Reaktorkanälen 2.

Die Düsen 3 bestehen vorzugsweise aus Madenschrauben mit einer Gewindegröße, die individuell auf die Kanalgröße angepasst werden kann. Die Madenschrauben sind innen bis auf eine Wandstärke von 0,1 bis 1,0 mm ausgespart. In die verbleibende Wand ist jeweils ein Loch mit einem Durchmesser von 0,05 bis 0,30 mm eingebracht. Besonders bevorzugte Dimensionen der Düsen 3 sind eine Wandstärke von 0,3 mm und ein Lochdurchmesser von 0,1 mm. Die Düsen 3 können. auch als Madenschrauben ausgestaltet werden, in die ein Druckrestriktor eingepresst ist.

In den Reaktorkanälen 2 werden unterschiedliche Reaktantgasdurchflussgeschwindigkeiten erreicht, indem die einschraubbaren und als Druckrestriktoren wirkenden Düsen 3 unterschiedliche Lochdurchmesser und Wandstärken aufweisen. Somit kann die Abhängigkeit der Testreaktion an der Festkörperschüttung 1 von der Durchflussgeschwindigkeit in einem Messdurchlauf untersucht werden. Zur Durchführung dieses Verfahrens können einerseits für jeden Reaktorkanal 2 unterschiedliche Druckrestriktoren 3 eingesetzt werden oder Gruppierungen verwendet werden, die jeweils die gleichen Druckrestriktoren 3 enthalten.

Die Aufheizung der Festkörperschüttung 1 oder des einzelnen Formkörpers bis zur gewünschten Reaktionstemperatur (in Abhängigkeit von den konkreten Untersuchungen von 30 bis 700 °C) erfolgt über vorgeheizte. Reaktantgase. Zur Vorheizung der Reaktantgase dient die Vorheizzone 5. Die am Ausgang der Vorheizzone 5 erwärmten Reaktantgase werden direkt zur aufzuheizenden Festkörperschüttung 1 bzw. zum aufzuheizenden Formkörper geleitet. Vorzugsweise befindet sich in jedem separaten Reaktorkanal 2 eine solche Vorheizzone 5. Als Variante kann auch eine Vorheizzone für alle Festkörperschüttungen 1 bzw. Formkörper verwendet werden, diese wird sich dann vor dem Gasverteiler befinden. Die Korngröße des hierfür benutzten Schüttgutes, für das eine Schüttung aus einem inerten Material (z.B. Quarzsand oder Alumiumoxid, insbesondere Siliziumcarbid) bevorzugt wird, kann je nach Reaktorgeometrie-, Temperatur- und Durchflusswahl zwischen 100 und 1000 µm liegen, wobei immer ein Druckabfall vorliegt, der gegenüber den Düsen 3 vernachlässigbar ist. Optional kann die Festkörperschüttung 1 oder der einzelne Formkörper auch zusätzlich direkt aufgeheizt werden. Jedoch muss gewährleistet werden, dass die Festkörperschüttung 1 bzw. der Formkörper von zumindest einer Seite für Sonden zur Charakterisierung bzw. Temperaturmessung zugänglich bleibt.

Zusätzlich zur gleichzeitigen Aufheizung aller Reaktorkanäle 2 kann jeweils ein bestimmter Bereich der linear angeordneten Reaktorkanäle 2 über jeweils individuelle Heizungen (z.B. Heizstrahler, Flächenheizung usw.) aufgeheizt und mit einer individuellen Temperatur betrieben werden. Somit können unterschiedliche Materialvorbehandlungen, wie die Festkörperaktivierung, unterschiedliche Reaktionstemperaturen, z.B. für die Erfassung der optimalen Reaktionsbedingungen, sowie eine temperaturprogrammierte Reduktion und Oxidation bei einem Messdurchlauf untersucht werden.

Für die nachfolgende Messung ist es erfindungsgemäß vorteilhaft, wenn als Sonde zur Temperaturmessung ein Pyrometer 8 oder eine Thermokamera verwendet wird.

Weiterhin können vorteilhaft die, mit der zumindest einen verlagerbaren Sonde 12 aus den Reaktorkanälen 2 entnommenen Abstromfluidproben einem oder mehreren unterschiedlichen Analysesystemen zugeführt werden.

Bevorzugt stehen die Sonden 12 zur Entnahme von Abstromfluidproben aus den Reaktorkanälen 2 mit einer Pumpe in fluidischer Wirkverbindung .

Die Reaktionstemperatur wird in jeder Festkörperschüttung 1 bzw. in jedem einzelnen Formkörper individuell ermittelt. Besonders bevorzugt sind kontaktlose Temperaturmessungen über ein Pyrometer 8. Hierbei wird mittels einer x,y-Verfahreinrichtung der Messfleck des Pyrometers 8 mit dem Durchmesser "d₂" sequentiell über die einzelnen Reaktorkanäle 2 geführt und die Temperatur an einer Stelle der Festkörperschüttung 1 bzw. des Formkörpers ermittelt. Der Durchmesser des Pyrometermessflecks kann je nach Dimension der Kanäle zwischen 0,1 und 10 mm annehmen. Zusätzlich wird jeweils über die individuelle Festkörperschüttung 1 bzw. den einzelnen Formkörper das Pyrometer 8 längs und quer zur Reaktantdurchflussrichtung verfahren. Folglich wird das Temperaturprofil axial und quer zur Strömungsrichtung über die Festkörperschüttung 1 bzw. den Formkörper ermittelt. Weiterhin können insbesondere Thermoelemente, die sich im thermischen Kontakt mit der jeweiligen Schüttung bzw. dem Formkörper befinden, verwendet werden.

Zur Untersuchung der physikalisch-chemischen Eigenschaften des Festkörpers während des Kontaktes der Festkörperschüttung 1 oder des einzelnen Formkörpers mit den Reaktionsgasen und unter Reaktionstemperatur (in-situ) werden unterschiedliche Sonden, insbesondere Kapillaren mit Lichtleiterfasern, für die einzelnen Charakterisierungsmethoden mit einer Verfahreinrichtung über die zu untersuchenden Materialien in den Reaktorkanälen 2 geführt. Somit wird eine sequentielle Aufnahme der entsprechenden physikalisch-chemischen Eigenschaften ermöglicht, wobei jeweils über die individuelle Festkörperschüttung 1 bzw. den einzelnen Formkörper die Sonde längs und quer zur Reaktantdurchflussrichtung verfahren wird. Demzufolge wird quer und axial zur Strömungsrichtung ein Profil der jeweiligen physikalisch-chemischen Eigenschaften über die Festkörperschüttung 1 oder den einzelnen Formkörper gemessen. Zu den zu verwendenden Methoden gehören alle Methoden, die mit einer Sonde bevorzugt in Reflektion betrieben werden können, insbesondere UV-Vis und lR-Spektroskopien, Röntgendiffraktometrie und -beugung, Röntgenfluoreszenz und Ramanspektroskopie.

Die Ausgänge der Reaktorkanäle 2 werden in der Halteplatte 10 und der zugeordneten Kammer 11 gasdicht aufgenommen. Zur Analytik des Reaktorabstroms wird eine Einrichtung mit einer Sonde 12 zur Probeentnahme mittels einer x,y,z-Verfahreinrichtung in den zu untersuchenden Reaktorkanal 2 eingefahren. Am anderen Ende dieser Entnahmeeinheit befindet sich eine Membran oder Ölpumpe, die das jeweilige Abstromgas aus den individuellen Kanälen 2 saugt. lm fluidischen Kontakt zwischen dem Anfang der Entnahmeeinheit und der Probenpumpe befindet sich die Analyseneinheit. Die Entnahmeeinheit kann aus jeder beliebigen Anordnung bestehen, die für das Einfahren in den zu untersuchenden Reaktorkanal 2 geeignet ist. Bevorzugt sind eine oder mehrere Kapillaren. Mehrere Kapillaren können zu einer Kammstruktur angeordnet sein und somit gleichzeitig in mehrere Reaktorkanäle 2 parallel eingefahren werden, die die gleichen Feststoffe enthalten.

Die nach diesem Verfahren aufgenommenen Abstromgase können zusammen geführt werden, um eine größere Menge von zu untersuchendem Abstromgas anzusammeln, insbesondere für kleine Reaktantdurchflüsse. Ebenso können die aufgenommenen Abstromgase mittels Mehrwegeventile nacheinander zur Analyseneinheit überführt werden, um die Abstromaufnahme zu beschleunigen. Zur Analyse des Abstromgases können alle herkömmlichen Methoden verwendet und kombiniert werden, wie z.B. Massenspektroskopie, Gaschromatographie, FTlR, Ramanspektroskopie. Bei der hier beschriebenen Variante wird ein Quadrupol-Massenspektrometer kombiniert mit einem parallel betriebenen Mikro-Gaschromatographen mit eingebauter Pumpe verwendet.

### Aufstellung der Bezugszeichen

- 1: Festkörperschüttung oder einzelner Formkörper
- 2: Reaktorkanal
- 3: Düse
- 4: Halteplatte
- 5: Vorheizzone
- 6: gestellartige Baugruppe
- 7: Quarzstrahler
- 8: Pyrometer
- 9: Gasverteiler
- 10: Halteplatte
- 11: gasdichte Kammer
- 12: Sonde
- 13: Reaktorplatte
- 14: Abdeckung
- 15: Sichtfenster
- 16: erste Gruppe des Gasverteilers
- 17: zweite Gruppe des Gasverteilers
- 18: dritte Gruppe des Gasverteilers
- 19: Abströmöffnung des Reaktorkanals

## Patentansprüche

1. Verfahren zur parallelisierten Prüfung der Leistungsfähigkeit sowie zur Ermittlung von physikalisch-chemischen Eigenschaften von Feststoffen unter Reaktionsbedingungen, wobei die Feststoffe jeweils als Schüttung oder einzelner Formkörper in mehreren parallel zueinander verlaufenden Reaktorkanälen angeordnet und von fluiden Medien durchströmt werden, **dadurch gekennzeichnet, dass**
- das den Feststoffen mit regelbarer Durchströmungsgeschwindigkeit zugeführte Reaktantfluid vorgeheizt ist,
- die physikalisch-chemischen Eigenschaften entlang einer einheitlich durchströmten Festkörperschüttung oder entlang eines einzelnen Formkörpers von außen durch die Wände der Reaktorkanäle durch senkrecht und waagerecht zur Fluidströmung sowie in der Höhe auch verlagerbare Sonden gemessen werden, wobei die Wände der Reaktorkanäle wenigstens im Bereich der Schüttung oder des Formkörpers teilweise oder vollständig transparent sind, und
- eine Probenahme des Abgasstromes durch eine oder mehrere in die Abströmöffnungen der Reaktorkanäle einführbare und in x,y,z-Richtung zur Abströmrichtung des Fluids verlagerbare Sonde(n) erfolgt.

2. Verfahren nach Anspruch 1, **dadurch gekennzeichnet,**
**dass** das den Feststoffen mit regelbarer Durchströmungsgeschwindigkeit zugeführte Reaktantfluid auf eine Temperatur vorgeheizt ist, die im Bereich von 10 bis 60%, insbesondere 10 bis 40% oberhalb der Prüfungs- oder Arbeitstemperatur der Feststoffe liegt.

3. Verfahren nach Anspruch 1, **dadurch gekennzeichnet,**
**dass** das den Feststoffen mit regelbarer Durchströmungsgeschwindigkeit zugeführte Reaktantfluid bei exothermen oder autothermen Reaktionen auf eine Temperatur vorgeheizt ist, die im Bereich von 10 bis 90%, insbesondere 10 bis 70% unterhalb der Prüfungs- oder Arbeitstemperatur der Feststoffe liegt.

4. Verfahren nach Anspruch 1, **dadurch gekennzeichnet,**
**dass** die Durchströmgeschwindigkeit und die Zusammensetzung der Reaktantfluide durch die Festkörperschüttung oder über den jeweiligen einzelnen Formkörper für jeden separaten Reaktorkanal oder für jeweils eine Gruppe von Reaktorkanälen individuell einstellbar ist.

5. Verfahren nach Anspruch 1, **dadurch gekennzeichnet,**
**dass** für einen oder mehrere Kanäle die Festkörperschüttung oder der einzelne Formkörper zusätzlich direkt aufgeheizt wird.

6. Vorrichtung zur Durchführung des Verfahrens nach Anspruch 1 zur parallelisierten Prüfung der Leistungsfähigkeit sowie zur Ermittlung von physikalisch-chemischen Eigenschaften von Feststoffen unter Reaktionsbedingungen, wobei die Feststoffe jeweils als Schüttung oder als einzelner Formkörper in mehreren parallel zueinander verlaufenden Reaktorkanälen angeordnet und von fluiden Medien durchströmt werden, **dadurch gekennzeichnet, dass**
jeder Reaktorkanal (2) in Strömungsrichtung folgenden Aufbau hat:
- eine Einrichtung zur Druckregelung (3) am Eingang des Reaktorkanals (2);
- eine Vorheizzone (5);
- eine Zone für eine Festkörperschüttung (1) oder für einen einzelnen Formkörper, wobei die Wandung des Reaktorkanals (2) wenigstens im Bereich der Festkörperschüttung (1) oder des einzelnen Formkörpers teilweise oder vollständig transparent ist;
- eine Abströmöffnung (19), die für die Einführung einer Sonde (12) zugänglich ist; und
- wobei außerhalb der Reaktorkanäle (2) eine erste Einrichtung zur Führung von Messsonden (8) angeordnet ist, die wenigstens über den Bereich der Festkörperschüttung (1) oder des einzelnen Formkörpers verfahrbar ist; und
- eine zweite Einrichtung zur Führung von Sonden (12) angeordnet ist, die wenigstens über den Bereich der Abströmöffnung (19) der Reaktorkanäle (2) verfahrbar ist.

7. Vorrichtung nach Anspruch 6, **dadurch gekennzeichnet,**
**dass** die Reaktorkanäle (2) in Strömungsrichtung von einem im Durchmesser zunächst größeren Abschnitt in einen, im Durchmesser kleineren Abschnitt übergehen.

8. Vorrichtung nach Anspruch 6, **dadurch gekennzeichnet,**
**dass** die Reaktorkanäle (2) zumindest im Bereich der Festkörperschüttung (1) oder des einzelnen Formkörpers teilweise oder vollständig transparent sind oder ein Sichtfenster, das teilweise oder vollständig transparent ist, aufweisen.

9. Vorrichtung nach Anspruch 6, **dadurch gekennzeichnet,**
**dass** die Reaktorkanäle (2) eingangsseitig in einer gemeinsamen Halteplatte (4) abgestützt sind, die mit einem Fluidverteiler (9) zur Zuführung von Reaktantfluid in Wirkverbindung steht , und ausgangsseitig in einer gemeinsamen Halteplatte (10) abgestützt sind, die mit einer fluiddichten Kammer (11) in Wirkverbindung steht, in der zumindest eine, in die Abströmöffnung (19) des Reaktorkanals (2) einfahrbare Sonde (12) zur Probenahme von Abstromfluid verlagerbar angeordnet ist.

10. Vorrichtung nach Anspruch 6, **dadurch gekennzeichnet,**
**dass** dem Strömungseingang jedes Reaktorkanals (2) einschraubbare Düsen (3) als Druckrestriktoren zugeordnet sind.

11. Vorrichtung nach Anspruch 6, **dadurch gekennzeichnet,**
**dass** die Reaktorkanäle (2) in einer gemeinsamen Reaktorplatte (13) angeordnet sind.

12. Vorrichtung nach Anspruch 6, **dadurch gekennzeichnet,**
**dass** der Strömungsweg des Reaktantfluids, die Wirkungsweise der Druckrestriktoren, die Vorheizzone, spezielle Aufnahmen für Festkörperschüttungen oder einzelne Formkörper und Veränderungen der Durchströmquerschnitte innerhalb der separaten Reaktorkanäle (2) durch die geometrischen Abmessungen einer, in der Reaktorplatte (13) ausgestalteten Kanalstruktur festgelegt sind.

13. Vorrichtung nach Anspruch 6, **dadurch gekennzeichnet,**
**dass** die Vorheizzone (5) mit mindestens einem, auf die Vorheizzone (5) strahlenden IR-Quarzstrahler (7) oder mit mindestens einer, im thermischen Kontakt mit der Wand der Vorheizzone (5) stehenden Flächenheizung ausgestaltet ist, oder die Vorheizzone (5) innerhalb einer Box mit einem Heizmedium ausgestaltet ist.

14. Vorrichtung nach einem der Ansprüche 6 und 13, **dadurch gekennzeichnet,**
**dass** die Festkörperschüttung (1) oder der einzelne Formkörper zusätzlich zur Anordnung einer Vorheizzone (5) zur Vorheizung der Reaktantfluide mit mindestens einer weiteren direkten Heizquelle gemäß Anspruch 14 in Kontakt stehen.
